# EUROPEAN PATENT APPLICATION

(11) **EP 2 682 857 A1**
(43) Date of publication of application: **08.01.2014**
(21) Application number: 12752622.6
(22) Date of filing: 27.02.2012
(51) Int. Cl.: G06F 3/12

(54) **DOUBLE-SIDED PRINTING SYSTEM AND CONTROL METHOD THEREFOR**

(30) Priority: 01.03.2011 CN 201110049565
(71) Applicant: Shandong New Beiyang Information Technology Co., Ltd., Hi-Tech Zone Weihai Shandong 264209 (CN)
(72) Inventor: WANG, Chuntao, Weihai Shandong 264209 (CN); DING, Jinfeng, Weihai Shandong 264209 (CN); WANG, Yuguo, Weihai Shandong 264209 (CN); YANG, Xiangang, Weihai Shandong 264209 (CN)
(74) Representative: Jansen, Cornelis Marinus
(86) International application number: PCT/CN2012/071677
(87) International publication number: WO 2012/116620

(57) **Abstract**

The invention provides a double-sided printing system and a control method thereof. The double-sided printing system comprises: a host which comprises a first generation unit for generating first printing data to be printed on a first side of a medium, and a second generation unit for generating second printing data to be printed on a second side of the medium; and a printer which comprises a controller, a first data buffer area for receiving and caching the first printing data, a second data buffer area for receiving and caching the second printing data, a first print head for printing the first printing data on the first side of the medium, and a second print head for printing the second printing data on the second side of the medium. By means of the double-sided printing system, the data processing load of the controller of the printer can be decreased; furthermore, as the double-sided printing is performed by independent generation units and interfaces, it enables double-sided printing without changing the application programs of a single-sided printing system, thus further conveniently converting a single-sided printing system to be a double-sided printing system.

## Description

### Technical field of the invention

The invention relates to the printing field, and in particular to a double-sided printing system and a control method thereof.

### Background of the invention

Printers are widely used for cash register systems in supermarkets, shopping malls, restaurants and other industries, for printing transaction details. With the changes of application requirements, lots of users not only require printing the transaction details on the receipts, but also expect to print coupons, advertisements and other information on the receipts as a promotion method.

In order to satisfy the requirements, the Chinese patent of which the publication number is CN1892571A provides a double-sided receipt issuing method, which can print the transaction data on one side of the receipt, and print the supplementary information on the other side of the receipt, such as discount information, coupons information and the like. The double-sided printing system is generally adopted to issue this double-sided receipt; the double-sided printing system comprises a host and a printer. Wherein, the printer comprises a first print head and a second print head which are set oppositely; the first print head is configured for printing the transaction data on one side of the receipt, and the second print head is configured for printing the supplementary information on the other side of the receipt. The host generates two sides of printing data (namely, the transaction data and the supplementary information) by the application program, and distributes the two sides of printing data to the printer together. Wherein, the application program sets a marking instruction which marks the correspondence between the printing data and the print head in front of each line of printing data; the controller of the printer determines to send this line of printing data to the corresponding print head for printing by reading the marking instruction in front of the printing data.

The inventor discovers that, as the double-sided printing system adds a marking instruction which marks the correspondence between the printing data and the print head in front of each line of printing data, the quantity of printing data is increased, which not only increases the data transmission load between the host and the printer, but also increases the data processing load of the controller of the printer, hinders the increase of the printing speed, and is not beneficial for high-speed printing.

### Summary of the invention

The purpose of the invention is to provide a double-sided printing system and a control method thereof, thus solving the above problem.

In order to realize the purpose, a double-sided printing system is provided according to one aspect of the invention. The double-sided printing system comprises a host and a printer, wherein, the host comprises: a first generation unit, configured for generating a first printing data to be printed on a first side of a medium; and a second generation unit, configured for generating a second printing data to be printed on a second side of the medium; the printer comprises: a controller; a first data buffer area, which is connected with the first generation unit by the controller, and is configured for receiving and caching the first printing data; a second data buffer area, which is connected with the second generation unit by the controller, and is configured for receiving and caching the second printing data; a first print head, which is connected with the first data buffer area by the controller, and is configured for printing the first printing data on the first side of the medium; and a second print head, which is connected with the second data buffer area by the controller, and is configured for receiving the second printing data and printing the second printing data on the second side of the medium.

In the above double-sided printer, the first print head is connected with the first generation unit, and the first print head is configured for receiving the first printing data and printing the first printing data on the first side of the medium; the second print head is connected with the second generation unit, and the second print head is configured for receiving the second printing data and printing the second printing data on the second side of the medium.

Further, the host further comprises: a first interface, connected with the first generation unit; and a second interface, connected with the second generation unit, the printer further comprises: a third interface, connected with the first interface of the host; and a fourth interface, connected with the second interface of the host, wherein, the first print head receives the first printing data by the third interface, and the second print head receives the second printing data by the fourth interface.

Further, the host is further configured for querying the status information of the printer, and respectively sending the first printing data and the second printing data to the third interface and the fourth interface of the printer by the first interface and the second interface when the printer is in idle state.

Further, the controller is further configured for implementing parsing for the first printing data to obtain a first raster data, and configured for implementing parsing for the second printing data to obtain a second raster data; wherein the first data buffer area comprises: a first receiving buffer area, which is connected with the third interface by the controller, and is configured for caching the first printing data; and a first printing buffer area, which is connected with the controller, and is configured for caching the first raster data; the second data buffer area comprises: a second receiving buffer area, which is connected with the fourth interface by the controller, and is configured for caching the second printing data; and a second printing buffer area, which is connected with the controller, and is configured for caching the second raster data.

Further, the controller is further configured for: querying the first receiving buffer area and the second receiving buffer area, reading the data from the receiving buffer area which has data earlier of the first receiving buffer area and the second receiving buffer area, converting the read data to be the raster data, and storing the raster data into the corresponding printing buffer area.

Further, the controller of the printer is further configured for: judging whether the second receiving buffer area has data when the receiving buffer area which has data earlier is the first receiving buffer area, and implementing printing according to the preset operations when the second buffer area has no data within a predetermined time.

Further, the controller of the printer is further configured for controlling the second print head to print the preset data on the second side of the medium when the second receiving buffer area has no data within the predetermined time.

Further, the controller of the printer is further configured for respectively judging whether the parsing of the printing data in the first receiving buffer area and the second receiving buffer area is completed, and for implementing the printing operation after the parsing of the printing data in both of the first receiving buffer area and the second receiving buffer area is completed.

Further, the host and the printer are connected by a fifth interface, wherein, the fifth interface is configured for establishing a first data transmission channel and a second data transmission channel between the host and the printer; the first data transmission channel is configured for transmitting the first printing data, and the second data transmission channel is configured for transmitting the second printing data.

In order to realize the purpose, a control method of the double-sided printing system is provided according to another aspect of the invention. The control method of the double-sided printing system comprises: generating a first printing data to be printed on a first side of the medium by a first generation unit, and generating a second printing data to be printed on a second side of the medium by a second generation unit; sending the first printing data to the first print head, and sending the second printing data to the second print head; and printing the first printing data and the second printing data on the first side of the medium and the second side of the medium respectively by the first print head and the second print head.

Further, the first printing data and the second printing data are respectively sent to the first print head and the second print head by the same interface or different interfaces.

Further, caching the first printing data and the second printing data respectively by different receiving buffer areas, and caching a first raster data and a second raster data respectively which are obtained by implementing parsing for the first printing data and the second printing data by the controller by different printing buffer areas.

The invention also provides a printer, which is the printer used for any one of the double-sided printing systems of the invention.

In the double-sided printing system provided by the invention, a first data transmission channel is formed between the first generation unit of the host and the first print head of the printer; the first data transmission channel is configured for transmitting the first printing data which is printed on the first side of the medium; a second data transmission channel is formed between the second generation unit of the host and the second print head of the printer, and the second data transmission channel is configured for transmitting the second printing data which is printed on the second side of the medium. As two data transmission channels are adopted to respectively send the first printing data to be printed on the first side of the medium and the second printing data to be printed on the second side of the medium, the marking instruction for marking the correspondence between the printing data and the print head needs not to be added in front of each of the printing data, thus reducing the data processing load of the controller of the printer, and further being beneficial for high-speed printing.

### Brief description of the drawings

The drawings for forming a part of the specification are used for further understanding the invention, the exemplary embodiments of the invention and the descriptions thereof are used for explaining the invention, without improperly limiting the invention. In the drawings:
Fig. 1 shows a block diagram of a double-sided printing system according to an embodiment of the invention;
Fig. 2 shows a block diagram of a preferred embodiment of the double-sided printing system according to the invention;
Fig. 3 shows a flowchart of a first embodiment of a control method of the double-sided printing system according to the invention;
Fig. 4 shows a flowchart of a second embodiment of a control method of the double-sided printing system according to the invention;
Fig. 5 shows a flowchart of a third embodiment of a control method of the double-sided printing system according to the invention;
Fig. 6 shows a diagram of a printer according to the embodiment of the invention;
Fig. 7 shows a flowchart of a first embodiment of the printing process of the printer according to the invention; and
Fig. 8 shows a flowchart of a second embodiment of the printing process of the printer according to the invention.

### Detailed description of the invention

It should be noted that, the embodiments of the application and the characteristics of the embodiments can be mutually combined in the case of no conflict. The invention is described below in details with reference to the drawings and embodiments.

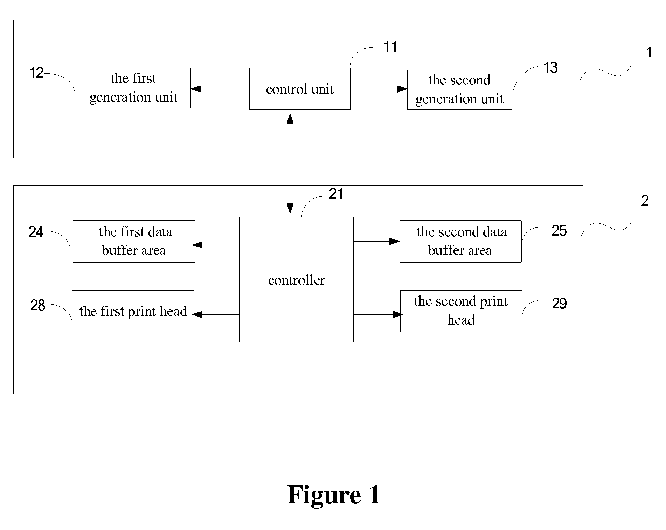

Fig. 1 shows a block diagram of a double-sided printing system according to an embodiment of the invention.

As shown in Fig. 1, the double-sided printing system comprises: a host 1 (also named as a print requesting device) and a printer 2. The host 1 comprises: a first generation unit 12, configured for generating a first printing data which is printed on the first side of the medium; and a second generation unit 13, configured for generating a second printing data which is printed on the second side of the medium. The printer 2 comprises: a controller 21; a first data buffer area 24, which is connected with the first generation unit 12 by the controller 21, and is configured for receiving and caching the first printing data; a second data buffer area 25, which is connected with the second generation unit 13 by the controller 21, and is configured for receiving and caching the second printing data; a first print head 28, which is connected with the first data buffer area 24 by the controller 21, and is configured for printing the first printing data on the first side of the medium; and a second print head 29, which is connected with the second data buffer area 25 by the controller 21, and is configured for receiving the second printing data and printing the second printing data on the second side of the medium.

In this embodiment, a first data transmission channel is formed among the first print head 28, the first data buffer area 24 and the first generation unit 12; a second data transmission channel is formed among the second print head 29, the second data buffer area 25 and the second generation unit 13; the printing data printed on the first side and the second side of the medium are respectively transmitted by the first data transmission channel and the second data transmission channel, so as to implement double-sided printing; therefore, the correspondence between the printing data and the print head can be realized without adding the marking instruction which marks the correspondence between the printing data and the print head in front of each line of the printing data, thus reducing the data processing load of the controller of the printer, and being beneficial for high-speed printing.

As a preferred embodiment of the invention, the host 1 further comprises: a first interface, which is connected with the first generation unit 12; and a second interface, which is connected with the second generation unit 13; the printer 2 further comprises: a third interface, connected with the first interface of the host 1, and a fourth interface, connected with the second interface of the host 1, wherein the first print head 28 receives the first printing data via the third interface, the second print head 29 receives the second printing data via the fourth interface. In this embodiment, by adopting the first generation unit and the second generation unit which are mutually independent to respectively generate the printing data printed on the first side and the second side of the medium, and using different interfaces to respectively transmit the printing data printed on the first side and the second side of the medium, not only the printing data printed on the first side and the second side of the medium can be directly distinguished, but also the double-sided printing can be realized on the basis of not changing the application program of the single-sided printing system, thus further converting the single-sided printing system to be the double-sided printing system conveniently. Specifically, as the first generation unit 12 and the second generation unit 13 are two independent application programs, when needing to convert the single-sided printing system to be the double-sided printing system, the double-sided printing can be realized on the basis of not changing the application program of the single-sided printing system used by the user, only by installing a second generation unit on the host when it is needed to change into the double-sided printer, and establishing an independent data transmission channel with the printer by the second interface. Therefore, the single-sided printing system can be conveniently converted to be the double-sided printing system by means of this embodiment.

Preferably, the host 1 is further configured for querying the status information of the printer 2, and when the printer 2 is in idle state, sending the first printing data and the second printing data respectively to the third interface and the fourth interface of the printer 2 via the first interface and the second interface,. As the host needs to query the status of the printer before sending the printing data to the printer, the host sends the data to the printer when the printer is in idle state, thus preventing the occurrence of losing or leaking the printing data when issuing the printing data in the case that the printer has failure.

Preferably, the controller is further configured for implementing parsing for the first printing data to obtain a first raster data, and for implementing parsing for the second printing data to obtain a second raster data. The first data buffer area comprises: a first receiving buffer area which is connected with the third interface, and is configured for caching the first printing data; a first printing buffer area which is configured for caching the first rater data. The second data buffer area comprises: a second receiving buffer area which is connected with the fourth interface, and is configured for caching the second printing data; and a second printing buffer area which is configured for caching the second raster data.

In this embodiment, the first generation unit, the first interface, the third interface, the first receiving buffer area, the first print interface and the first print head form the first data transmission channel; the second generation unit, the second interface, the fourth interface, the second receiving buffer area, the second printing buffer area and the second print head form the second data transmission channel, wherein, the first data transmission channel and the second data transmission channel are mutually independent, which do not disturb each other. The printing data printed on the first side and the second side of the medium can be respectively transmitted by the first data transmission channel and the second data transmission channel, so as to implement double-sided printing.

Preferably, the controller of the printer 2 is further configured for: querying the first receiving buffer area and the second receiving buffer area, reading the data from the receiving buffer area which has data earlier of the first receiving buffer area and the second receiving buffer area, converting the read data to be the raster data, and storing the raster data into the corresponding printing buffer area. In this embodiment, the data converting efficiency can be improved by reading data from the receiving buffer area which has data earlier of the first receiving buffer area and the second receiving buffer area, and converting the read data.

Preferably, the controller of the printer 2 is further configured for: judging whether the second receiving buffer area has data when the receiving buffer area which has data earlier is the first receiving buffer area, and configured for implementing printing according to the preset operations when the second receiving buffer area has no data within a predetermined time. In this embodiment, the printer does not need to wait for too long time for the double-sided printing data; the printing operation can be implemented according to the predetermined setting after the predetermined time of receiving the single-sided printing data.

Preferably, the controller of the printer 2 is further configured for controlling the second print head to print the preset data on the second side of the medium when the second receiving buffer area has no data within a predetermined time. In this embodiment, the effect of printing on both sides of the medium can be realized even when the printing data of a certain side cannot be received.

Preferably, the controller of the printer 2 is further configured for respectively judging whether the parsing of the printing data in the first receiving buffer area and the second receiving buffer area is completed, and configured for implementing the printing operation after the parsing of the printing data in both of the first receiving buffer area and the second receiving buffer area is completed. The data loss can be prevented by implementing printing after the parsing of the printing data on both sides is completed.

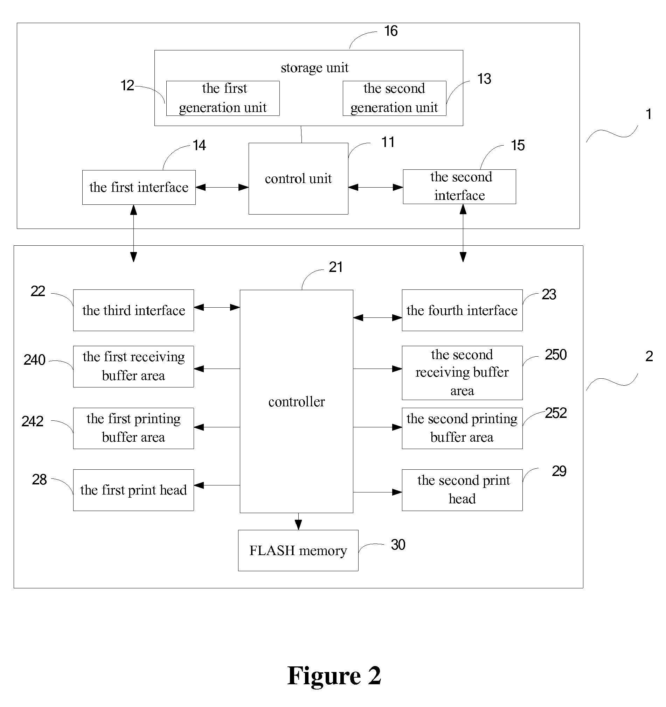

Fig. 2 shows a block diagram of a preferred embodiment of the double-sided printing system according to the invention. As shown in Fig. 2, the double-sided printing system comprises a host 1 and a printer 2. The host 1 can be a computer or other control devices, including a control unit 11, a storage unit 16, a first interface 14 and a second interface 15. The control unit 11 implements operations based on the operation system and other programs in the storage unit 16, so as to execute various information processing operations. The storage unit 16 comprises a Read Only Memory (ROM), a Random-Access Memory (RAM) and a hard disk drive. The storage unit 16 stores the programs to be executed by the control unit 11. The storage unit 16 is also operated as a working memory, configured for storing various types of data required during the processing procedure executed by the control unit 11.

The installation program of the storage unit 16 comprises a first generation unit 12 and a second generation unit 13. The first generation unit 12 is configured for generating the first printing data to be printed on one side of the medium. The second generation unit 13 is configured for generating the second printing data to be printed on the other side of the medium. The first interface 14 and the second interface 15 are configured for connecting the printer 2 to the host 1, so as to establish communication between the printer 2 and the host 1, and to implement data interaction. The first interface 14 is connected with a data output port of the first generation unit 12, and can transmit the first printing data generated by the first generation unit 12 to the printer. The second interface 15 is connected with a data output port of the second generation unit 13, and can transmit the second printing data generated by the second generation unit 13 to the printer. The first interface 14 and the second interface 15 can be serial interfaces, parallel interfaces, Universal Serial Bus (USB) interfaces, or Ethernet interfaces and the like.

The printer 2 comprises a controller 21, the third interface 22, the fourth interface 23, the first data buffer area 24, the second data buffer area 25, the first print head 28, the second print head 29 and an FLASH memory 30. The first data buffer area 24 comprises a first receiving buffer area 240 and a first printing buffer area 242, and the second data buffer area 25 comprises a second receiving buffer area 250 and a second printing buffer area 252. The controller 21 is configured for controlling all modules of the printer 2 to work. The third interface 22 is in wired connection with the first interface 14 of the host 1 by a communication wire, or is in wireless connection with the first interface 14 by a wireless communication module, configured for receiving the first printing data sent from the host 1, or feeding back the status of the printer 2 to the host 1. The fourth interface 23 is in wired connection with the second interface 15 of the host 1 by a communication wire, or is in wireless connection with the second interface 15 by a wireless communication module, configured for receiving the second printing data sent by the host 1, or feeding back the status of the printer 2 to the host. It should be noted that the types of the third interface 22 and the first interface 14 are matched; the types of the fourth interface 23 and the second interface 15 are matched. The first receiving buffer area 240 is configured for caching the first printing data sent to the printer by the third interface 22; the second receiving buffer area 250 is configured for caching the second printing data sent to the printer by the fourth interface 23; the first printing buffer area 242 is configured for caching the first raster data, wherein, the first raster data is the data generated after that the controller 21 completes the parsing for the first printing data stored in the first receiving buffer area 22; the second printing buffer area 252 is configured for caching the second raster data, wherein, the second raster data is the data generated after that the controller 21 completes parsing for the second printing data stored in the second receiving buffer area 23. The first print head 28 is configured for forming the first raster data on one side of the medium, the second print head 29 is configured for forming the second raster data on the other side of the medium. The FLASH memory 30 is configured for storing the data relative to the printing control, such as the predefined printing data, the status mark of the printer, the waiting time, the time threshold and the like, wherein, the printing system distributes the address of the memory of the printer in advance, sets the first receiving buffer area 240, the first printing buffer area 242, the second receiving buffer area 250 and the second printing buffer area 252, and meanwhile, the printing system also sets the correspondence between the first receiving buffer area 240, the first printing buffer area 242 and the first print head 28, and the correspondence between the second receiving buffer area 250, the second printing buffer area 252 and the second print head 29. The controller 21 stores the received first printing data to the storage address corresponding to the first receiving buffer area 240, and stores the received second printing data to the storage address corresponding to the second receiving buffer area 250, and the controller 21 stores the first raster data which is generated after implementing parsing for the first printing data stored in the first receiving buffer area 240 to the storage address corresponding to the first printing buffer area 242, and stores the second raster data which is generated after implementing parsing for the second printing data stored in the second receiving buffer area 250 to the storage address corresponding to the second printing buffer area 252; the controller 21 sends the first raster data to the first print head 28, and sends the second raster data to the second print head 29 according to the correspondence between the first printing buffer area 242, the second printing buffer area 252, the first print head 28 and the second print head 29.

From the above description, it can be seen that the first generation unit, the first interface, the third interface, the first receiving buffer area, the first printing buffer area and the first print head form the first data transmission channel; the second generation unit, the second interface, the fourth interface, the second receiving buffer area, the second printing buffer area and the second print head form the second data transmission channel, wherein, the first data transmission channel and the second data transmission channel are mutually independent, without disturbing each other; the printing data printed on the first side and the second side of the medium can be respectively printed by the first data transmission channel and the second data transmission channel, thus implementing double-sided printing.

Preferably, the host is connected with the printer by the fifth interface, wherein, the fifth interface is configured for establishing the first data transmission channel and the second data transmission channel between the host and the printer; the first data transmission channel is configured for transmitting the first printing data, the second data transmission channel is configured for transmitting the second printing data. Namely, the first data transmission channel for printing on one side of the medium and the second data transmission channel for printing on the other side of the medium can be established between the host and the printer of the printing system of the invention by a physical interface. For example, when the printer communicates with the host by a USB interface, the host acquires a plurality of logical functions of the accessed printer; one device is installed on the host corresponding to each of the logical functions; each installed device is set to occupy an independent pipeline, so as to transmit the data relative to the corresponding logical function by the independent pipeline. The multiple logical functions of the printer comprise a first logical function of transmitting the first printing data and the second logical function of transmitting the second printing data. The data relative to the first logical function is set to be transmitted by the first pipeline, and the data relative to the second logical function is set to be transmitted by the second pipeline, thus, the first printing data generated by the first generation unit is transmitted to the first data buffer area by the first pipeline, the second printing data generated by the second generation unit is transmitted to the second data buffer area by the second pipeline. The specific method of establishing multiple pipelines communication between the printer and the host by a USB interface can refer to the content recorded by the Chinese patent of which the application number is 200910176510.3.

It should be noted that, the first receiving buffer area 240, the second receiving buffer area 250, the first printing buffer area 242 and the second printing buffer area 252 can be RAMs which are mutually independent, and also can be different storage areas in one RAM.

The control method of the printing system provided by the embodiment of the invention is introduced below, it should be noted that the control method of the printing system provided by the embodiment of the invention can be executed based on the printing system provided by the embodiment of the invention; in addition, the printing system provided by the embodiment of the invention also can be configured for executing the control method of the printing system provided by the embodiment of the invention. All steps in the control method of the printing system in the embodiment of the invention can be mutually combined.

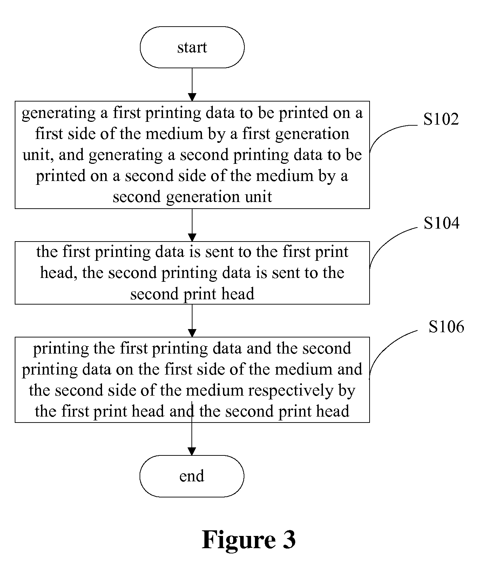

Fig. 3 shows a flowchart of a first embodiment of a control method of the double-sided printing system according to the invention. As shown in Fig. 3, the control method of the double-sided printing system comprises:

Step S102: generating a first printing data to be printed on a first side of the medium by a first generation unit, and generating a second printing data to be printed on a second side of the medium by a second generation unit.

Step S104, sending the first printing data to the first print head, and sending the second printing data to the second print head.

Step S106, printing the first printing data and the second printing data on the first side of the medium and the second side of the medium respectively by the first print head and the second print head.

In this embodiment, generating the data to be printed on the first side of the medium by using the first generation unit, sending the data to the first print head for implementing printing on the first side of the medium; generating the data to be printed on the second side of the medium by using the second generation unit, and transmitting the data to the second print head for implementing printing on the second side of the medium, so as to implement double-sided printing; the correspondence between the printing data and the print head can be realized without adding the marking instruction for marking the correspondence between the printing data and the print head in front of each line of the printing data, thus reducing the data processing load of the controller of the printer, and further being beneficial for high-speed printing.

Preferably, the first printing data and the second printing data are respectively sent to the first print head and the second print head by the same interface or different interfaces. When respectively sending the first printing data and the second printing data to the first print head and the second print head by adopting the same interface, it can be completed by the embodiment that the host and the printer are connected by the fifth interface, such that the structure of the printing system can be simplified; when respectively sending the first printing data and the second printing data to the first print head and the second print head by adopting different interfaces, it can be completed by the embodiment that the host and the printer are connected by the first, the second, the third and the fourth interfaces, such that the software changes can be minimized, and the operations can be simple.

Preferably, using different receiving buffer areas to respectively cache the first printing data and the second printing data, and using different printing buffer areas to respectively cache the first raster data and the second raster data which are obtained by completing parsing for the first printing data and the second printing data by the controller.

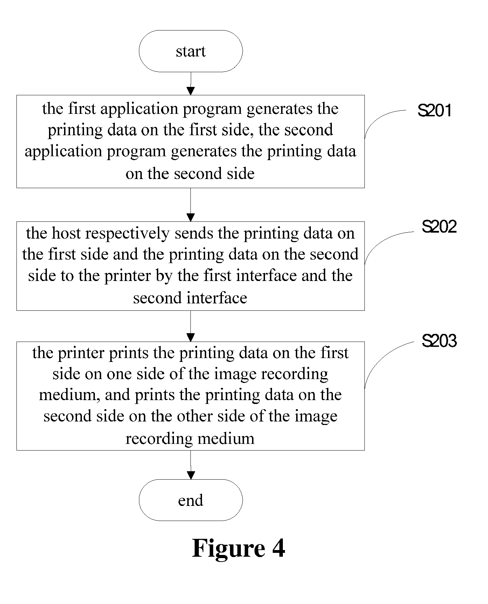

Fig. 4 shows a flowchart of a second embodiment of a control method of the double-sided printing system according to the invention, as shown in Fig. 4, the method comprises:

Step S201, the first generation unit generates the first printing data; the second generation unit generates the second printing data.

The first generation unit can be the application programs which generate the transaction information; the operators type the transaction information such as the name, quantity and price of the goods in the first generation unit by the computer peripherals such as keyboard, mouse and bar code readers. The first generation unit generates the first printing data according to the transaction information. The second generation unit can be the application programs which generate the supplementary information; the supplementary information can be coupons information, discount information, match information, advertisement information and the like. The second generation unit generates the second printing data according to the supplementary information, wherein, the supplementary information can be typed in the second generation unit by the operator, or can be obtained by controlling the second generation unit to select the setting information stored in the storage unit of the host by the control unit of the host. Of course, the second generation unit also can be the application programs which generate the transaction information, thus, the transaction information can be printed on both sides of the medium to achieve the purpose of saving paper.

Step S202, the host respectively sends the first printing data and the second printing data to the printer by the first interface and the second interface.

The host sends the first printing data generated by the first generation unit to the printer by the first interface, the controller of the printer temporarily stores the received first printing data into the first data buffer area. The host sends the second printing data generated by the second generation unit to the printer by the second interface, the controller of the printer temporarily stores the received second printing data into the second data buffer area.

Step S203, the printer prints the first printing data on one side of the medium, and prints the second printing data on the other side of the medium.

The controller of the printer sends the first printing data which is temporarily stored in the first data buffer area to the first print head, the first print head prints the first printing data on one side of the medium; the controller of the printer sends the second printing data which is temporarily stored in the second data buffer area to the second print head, the second print head prints the second printing data on the other side of the medium.

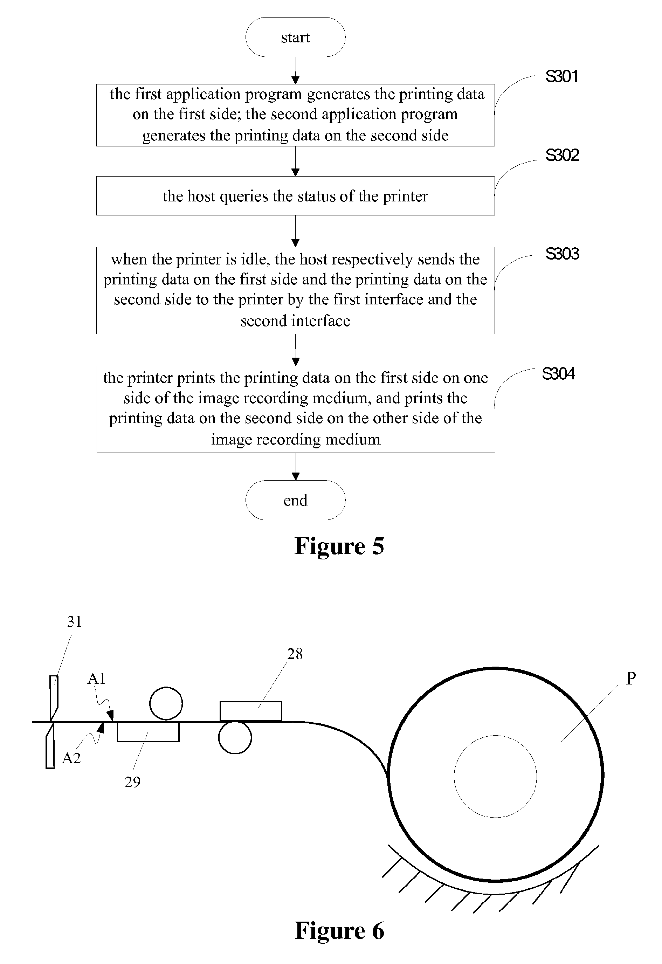

Fig. 5 shows a flowchart of a third embodiment of a control method of the double-sided printing system according to the invention; as shown in Fig. 5, the method comprises:

Step S301, the first generation unit generates the first printing data, and the second generation unit generates the second printing data.

Step S302, the host queries the status of the printer.

The status of the printer generally comprises the idle status, the status of being printed, the status of normally ending printing and the status of having a printing failure. The real-time status information of the printer can be represented by a plurality of byte packets and bits of byte in the FLASH memory or the RAM memory of the printer; the different bytes and the different bits of each byte correspondingly indicate various statuses of the printer. The host control software can query the mark byte of the real-time status of the printer by sending the real-time instruction; after sending the query instruction to the printer each time, the printer immediately returns a status mark byte to the host control software, thus, the host can know the status of the printer.

Step S303, when the printer is in idle status, the host respectively sends the first printing data and the second printing data to the printer by the first interface and the second interface.

Step S304, the printer prints the first printing data on one side of the medium, and prints the second printing data on the other side of the medium.

In the control method of the printing system provided by the embodiment, the host needs to query the status of the printer before sending the printing data to the printer, and the host sends the data to the printer only when the printer is in idle status, thus preventing the occurrence of losing or leaking the printing data during issuing the printing data when the printer has failure.

The embodiment of the invention also provides a printer which can be used for any one of the double-sided printing systems provided by the embodiment of the invention. The printer provided by the embodiment of the invention is introduced below.

Fig. 6 shows a diagram of a printer according to the embodiment of the invention. As shown in Fig. 6, the first print head 28 and the second print head 29 are respectively located on two sides of the transmission channel of the medium, and are configured for respectively forming images on the first side A1 and the second side A2 of the medium P. The first print head 28 and the second print head 29 can be thermal sensitive print heads, dot-matrix print heads or ink jet print heads and the like. The printer further comprises a cutter device 31 configured for cutting the printed medium, thus separating the printed medium from the non-used medium.

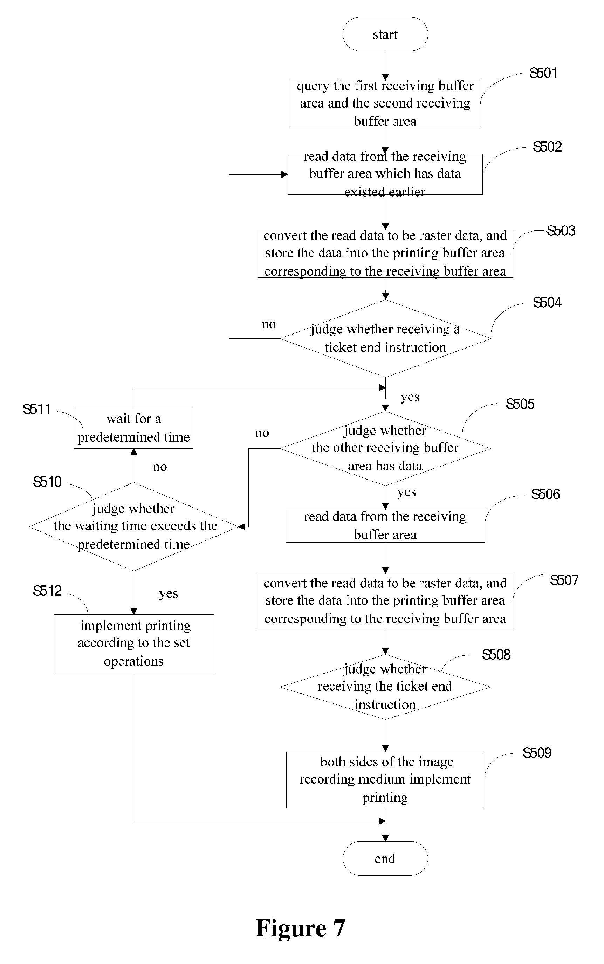

Fig. 7 shows a flowchart of a first embodiment of the printing process of the printer according to the invention; the method comprises:

Step S501, querying the first receiving buffer area and the second receiving buffer area.

The controller of the printer queries the first receiving buffer area and the second receiving buffer area timely, and waits for the printing data sent by the host.

Step S502, reading data from the receiving buffer area which has data earlier.

The controller reads the data from the receiving buffer area which has the data earlier. For example, the controller firstly reads data from the first receiving buffer area if firstly querying that the first receiving buffer area has data.

Step S503, converting the read data to be the raster data, and storing the raster data into the printing buffer area corresponding to the receiving buffer area.

Generally, the printing data generated by the application programs which are installed by the host comprises a printing content instruction which defines the printing data and a printing control instruction which controls the action of the printer; the printer also needs various instructions to implement analysis when printing the data, to convert the data defined by the printing content instruction such as characters and bar codes to be the raster data, and then to implement printing by the print heads according to the printing control instruction. Therefore, the data read by the controller is converted to the raster data and stored in the printer buffer corresponding to the receiving buffer area. For example, the first receiving buffer area receives the first printing data generated by the first generation unit, the controller stores the first raster data which is generated after analyzing the first printing data read from the first receiving buffer area into the first printing buffer area, thus, the first printing buffer area is corresponding to the first receiving buffer area; the second receiving buffer area generates the second printing data generated by the second generation unit, the controller stores the second raster data which is generated after analyzing the second printing data read from the second receiving buffer area into the second printing buffer area, therefore, the second printing buffer area is corresponding to the second receiving buffer area. The controller determines the correspondence between each of the buffers according to the address of each of the predefined buffers.

Step S504, judging whether reading the ticket end instruction, if yes, implementing Step S505, otherwise, implementing Step S502.

Judging whether reading the ticket end instruction which represents that the data on this side ends. When the printer is provided with a cutter device, the ticket end instruction can be a cutter instruction for indicating the cutter device to cut off the medium. When judging that the data on this side ends, implementing Step S505, so as to process the data in the other receiving buffer area; otherwise, implementing Step S502, continuously reads data from the current receiving buffer area.

Step S505, judging whether the other receiving buffer area has data, if yes, implementing Step S506, otherwise, implementing Step S510.

After processing the data in the receiving buffer area which has the data earlier, the controller queries whether the other receiving buffer area has data, if yes, implementing Step S506, reading data from this receiving buffer area, otherwise, implementing Step S510. For example, the controller firstly processes the data in the first receiving buffer area; when the processing of the data in the first receiving buffer area is completed, the controller queries whether the second receiving buffer area has data, so as to implement subsequent processing.

Step S506, reading data from the other receiving buffer area.

The controller reads the data from the other receiving buffer area. For example, the controller firstly reads the data from the first receiving buffer area; and after the processing of the data in the first receiving buffer area is completed, the controller reads data from the second receiving buffer area.

Step S507, converting the read data to be the raster data, and storing the data into the printing buffer area corresponding to the receiving buffer area.

This step is the same as Step S503, and is not repeated.

Step S508, judging whether receiving the cutter instruction or the ticket end instruction, if yes, implementing Step S509, otherwise, implementing Step S506.

Judging whether reading the ticket end instruction which represents that the data on this side ends. When the printer is provided with a cutter device, the ticket end instruction can be the cutter instruction for indicating the cutter device to cut off the medium. When judging that the data on this side ends, implementing Step S509, implementing printing; otherwise, implementing Step S506, continuously reads the data from the current receiving buffer area.

Step S509, implementing printing on both sides of the medium.

After all data of the first receiving buffer area and the second receiving buffer area are processed and respectively stored in the first printing buffer area and the second printing buffer area, the controller sends the first raster data in the first printing buffer area to the first print head, wherein, the first print head is opposite to one side of the medium; the controller sends the second raster data in the second printing buffer area to the second print head, wherein the second print head is opposite to the other side of the medium; and meanwhile, the controller controls the medium to move; during the movement of the medium, the first print head and the second print head respectively implement printing on both sides of the medium, to form the images or characters.

It should note that, during the process that the first print head or the second print head implements printing, the controller sets the status information of the printer as the status of being printed; after normally completing printing, the controller sets the status information of the printer as the status of normally ending and the idle status.

Step S510, judging whether the waiting time exceeds the time threshold.

If the other receiving buffer area has no data, the controller judges whether the waiting time exceeds the time threshold, if not, implementing Step S511, waiting for a predetermined time; otherwise, implementing Step S512. The controller can judge whether the waiting time exceeds the time threshold by comparing the waiting time stored in the memory of the printer and the time threshold.

Step S511, waiting for a predetermined time.

The controller starts timing, waits for the predetermined time, and stores the waiting time into the memory of the printer. If a waiting time has been stored in the memory, a new waiting time is obtained by accumulating the predetermined time on the basis of the original waiting time, and is stored in the memory of the printer. After waiting for the predetermined time, the controller queries whether the other receiving buffer area has data again.

Step S512, implementing printing according to the setting operations.

When the other receiving buffer area has no data, the controller controls the printer to implement the set operations.

The set operations can be an operation that the controller sends the raster data stored in the receiving buffer area which is corresponding to the receiving buffer area of the data to the printer head corresponding to the printing buffer area to implement printing, thus, the printer only implements printing on one side of the medium. For example, the first printing buffer area is corresponding to the first print head, and the second printing buffer area is corresponding to the second print head.

The set operation also can be an operation that the controller sends the raster data stored in the receiving buffer area which is corresponding to the receiving buffer area of the data to the print head corresponding to the printing buffer area to implement printing, and meanwhile, sends the predefined printing data stored in the FLASH memory to the print head corresponding to the receiving buffer area which has no data to implement printing, thus, the printer can implement printing on both sides of the medium. The predefined data can be the coupons information, discount information, match information, advertisement information and the like.

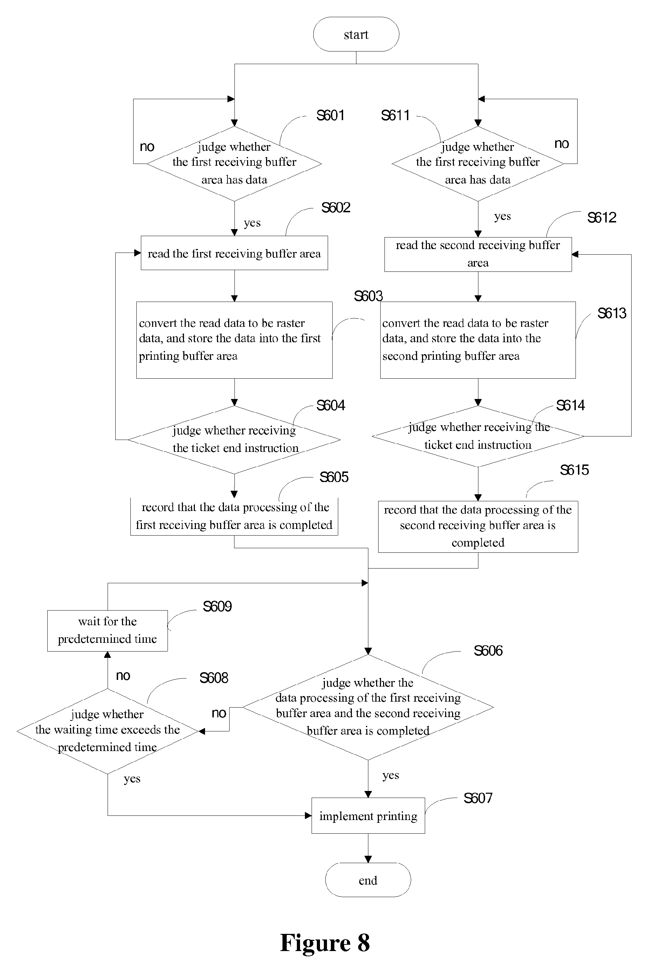

Fig. 8 shows a flowchart of a second embodiment of the printing process of the printer according to the invention, as shown in Fig. 8, the method comprises:

Step S601, judging whether the first receiving buffer area has data, if yes, implementing Step S602, otherwise, continuously judging.

Step S602, reading the data in the first receiving buffer area.

The first receiving buffer area receives the first printing data generated by the first generation unit.

Step S603, converting the read data to be the raster data, and storing the raster data into the first printing buffer area.

The controller converts the first printing data to be the first raster data, and stores the raster data into the first printing buffer area.

Step S604, judging whether reading the ticket end instruction, if yes, implementing Step S605, otherwise, implementing Step S602.

Step S605, recording that the data in the first receiving buffer area is completely processed.

The specific method of recording that the data in the first receiving buffer area is completely processed enables to represent by different values of one byte in the FLASH memory or RAM memory of the printer. After the data of the first receiving buffer area is completely processed, this byte is set to be 1, otherwise, the byte is set to be 0. After one printing task is completed, this byte is reset.

Step S611, judging whether the second receiving buffer area has data, if yes, implementing Step S612, otherwise, continuously judging.

Step S612, reading the data of the second receiving buffer area.

The second receiving buffer area receives the second printing data generated by the second generation unit.

Step S613, converting the read data to be the raster data, and storing the raster data into the second printing buffer area.

The controller converts the second printing data to the second raster data, and storing the raster data in the second printing buffer area.

Step S614, judging whether reading the ticket end instruction, if yes, implementing Step S615, otherwise, implementing Step S612.

Step S615, recording that the data of the second receiving buffer area is completely processed.

The specific method of recording that the data in the second receiving buffer area is completely processed enables to represent by different values of one byte in the FLASH memory or RAM memory of the printer. After the data of the second receiving buffer area is completely processed, this byte is set to be 1; otherwise, the byte is set to be 0. After one printing task is completed, this byte is reset.

The Steps S601-S605 and the Steps S611-S615 are in parallel execution.

Step S606, judging whether the data of the first receiving buffer area and the second receiving buffer area is processed completely, if yes, implementing Step S607, otherwise, implementing Step S608.

The controller can know whether the data of the first receiving buffer area and the second receiving buffer area is processed completely by reading the value of the byte which represents the data processing status of the first receiving buffer area and the second receiving buffer area.

Step S607, implementing printing.

If both the first printing buffer area and the second printing buffer area have the raster data, the controller sends the first raster data in the first printing buffer area to the first print head, the first print head implements printing on one side of the medium; the controller sends the second raster data in the second printing buffer area to the second print head, and the print head implements printing on the other side of the medium.

If only one of the first printing buffer area and the second printing buffer area has the raster data, the controller sends the raster data to the corresponding print head; the print head implements printing on one side of the medium; and the other print head does not work.

Or, if only one of first printing buffer area and the second printing buffer area has the data, the controller sends the raster data to the corresponding print head; the print head implements printing on one side of the medium; and meanwhile, the controller sends the predefined printing data stored in the FLASH memory to the print head corresponding to the printing buffer area which has no data to implement printing, thus, the printer is capable of printing on both sides of the medium. The predefined data can be the coupons information, discount information, match information, advertisement information and the like.

Step S608, judging whether the waiting time exceeds the time threshold.

When only the data of one of the first receiving buffer area and the second receiving buffer area is completely processed, the controller judges whether the waiting time exceeds the time threshold, if not, implementing Step S609, waiting for a predetermined time; otherwise, implementing Step S607. The controller can judge whether the waiting time exceeds the time threshold by comparing the waiting time stored in the memory of the printer and the time threshold.

Step S609, waiting for a predetermined time.

As the data quantities received by the first receiving buffer area and the second receiving buffer area may be different, the time required for processing data of the two receiving buffer areas may also be different, therefore, a waiting time can be set, such that all data in the first receiving buffer area and the second receiving buffer area can be processed completely.

From the above adscription, it can be seen that the invention can reduce the data transmission load between the host and the printer, increase the printing speed, can implement double-sided printing on the basis of not changing the application programs of the single-sided printing system, and can conveniently convert the existing single-sided printing system to be the double-sided printing system.

The above is only the preferred embodiment of the invention and not intended to limit the invention, and for those skilled in the art, the invention can have various modifications and changes. Any modifications, equivalent replacements, improvements and the like within the spirit and principle of the invention shall fall within the scope of protection of the invention.

## Claims

1. A double-sided printing system, **characterized in that** the double-sided printer comprises a host and a printer, wherein,
the host comprises:
a first generation unit, configured for generating a first printing data to be printed on a first side of a medium; and
a second generation unit, configured for generating a second printing data to be printed on a second side of the medium,
the printer comprises:
a controller;
a first data buffer area, which is connected with the first generation unit by the controller, and is configured for receiving and caching the first printing data;
a second data buffer area, which is connected with the second generation unit by the controller, and is configured for receiving and caching the second printing data;
a first print head, which is connected with the first data buffer area by the controller, and is configured for printing the first printing data on the first side of the medium; and
a second print head, which is connected with the second data buffer area by the controller, and is configured for printing the second printing data on the second side of the medium.

2. The double-sided printing system according to claim 1, **characterized in that**:
the host further comprises:
a first interface, connected with the first generation unit; and
a second interface, connected with the second generation unit,
the printer further comprises:
a third interface, connected with the first interface of the host; and
a fourth interface, connected with the second interface of the host,
wherein the first print head is configured for receiving the first printing data by the third interface, and the second print head is configured for receiving the second printing data by the fourth interface.

3. The double-sided printing system according to claim 2, **characterized in that** the host is further configured for querying status information of the printer, and respectively sending the first printing data and the second printing data to the third interface and the fourth interface of the printer via the first interface and the second interface when the printer is in idle state.

4. The double-sided printing system according to claim 2, **characterized in that** the controller is further configured for implementing parsing for the first printing data to obtain a first raster data, and for implementing parsing for the second printing data to obtain a second raster data;
the first data buffer area comprises:
a first receiving buffer area, which is connected with the third interface by the controller, and is configured for caching the first printing data; and
a first printing buffer area, which is connected with the controller, and is configured for caching the first raster data;
the second data buffer area comprises:
a second receiving buffer area, which is connected with the fourth interface by the controller, and is configured for caching the second printing data; and
a second printing buffer area, which is connected with the controller, and is configured for caching the second raster data.

5. The double-sided printing system according to claim 4, **characterized in that** the controller is further configured for:
querying the first receiving buffer area and the second receiving buffer area, reading the data from the receiving buffer area which has data earlier of the first receiving buffer area and the second receiving buffer area, converting the read data into the raster data, and storing the raster data into the corresponding printing buffer area.

6. The double-sided printing system according to claim 5, **characterized in that** the controller of the printer is further configured for: judging whether the second receiving buffer area has data when the receiving buffer area which has data earlier is the first receiving buffer area, and implementing printing according to preset operations when the second buffer area has no data within a predetermined time.

7. The double-sided printing system according to claim 6, **characterized in that** the controller of the printer is further configured for controlling the second print head to print the preset data on the second side of the medium when the second receiving buffer area has no data within the predetermined time.

8. The double-sided printing system according to claim 4, **characterized in that** the controller of the printer is further configured for respectively judging whether the parsing of the printing data in the first receiving buffer area and the second receiving buffer area is completed, and for implementing the printing operation after the parsing of the printing data in both the first receiving buffer area and the second receiving buffer area is completed.

9. The double-sided printing system according to claim 1, **characterized in that** the host and the printer are connected by a fifth interface, wherein the fifth interface is configured for establishing a first data transmission channel and a second data transmission channel between the host and the printer; the first data transmission channel is configured for transmitting the first printing data, and the second data transmission channel is configured for transmitting the second printing data.

10. A control method of a double-sided printing system, **characterized by** comprising:
generating a first printing data to be printed on a first side of the medium by a first generation unit, and generating a second printing data to be printed on a second side of the medium by a second generation unit;
sending the first printing data to a first print head, and sending the second printing data to a second print head; and
printing the first printing data and the second printing data on the first side of the medium and the second side of the medium respectively by the first print head and the second print head.

11. The control method of the double-sided printing system according to claim 10, **characterized in that** the first printing data and the second printing data are respectively sent to the first print head and the second print head by the same interface or different interfaces.

12. The control method of the double-sided printing system according to claim 10, caching the first printing data and the second printing data respectively by different receiving buffer areas, and respectively caching a first raster data and a second raster data, which are obtained by implementing parsing for the first printing data and the second printing data by the controller respectively, by different printing buffer areas.

13. A printer used for the double-sided printing system according to any one of claims 1 to 9.
